# EUROPEAN PATENT SPECIFICATION

(11) **EP 3 910 784 B1**
(45) Date of publication and mention of the grant of the patent: **02.04.2025**
(21) Application number: 21157554.3
(22) Date of filing: 17.02.2021
(51) Int. Cl.: H02N 1/04

(54) **METHOD FOR MANUFACTURING SMART TEXTILE ENERGY HARVESTER AND SENSOR**
VERFAHREN ZUR HERSTELLUNG EINER INTELLIGENTEN TEXTILEN ENERGIEGEWINNUNGSVORRICHTUNG UND EINES SENSORS
PROCÉDÉ DE FABRICATION D'UN COLLECTEUR D'ÉNERGIE TEXTILE INTELLIGENT ET CAPTEUR

(30) Priority: 13.05.2020 AT 601542020
(43) Date of publication of application: 17.11.2021
(73) Proprietor: V-TRION GmbH, 6890 Lustenau (AT)
(72) Inventor: Hossain, Gaffar, 6845 Hohenems (AT); Hossain, Ishtia Zahir, 8645 Hohenems (AT); Grabher, Günter, 6845 Hohenems (AT)
(74) Representative: Schwarz & Partner Patentanwälte GmbH

(56) References cited:
- CN-A- 109 123 854
- US-A1- 2019 356 243

## Description

The present invention relates to triboelectric smart textile composites for energy harvesting and a method for manufacturing said textile.

### Background of the invention

In recent years, there has been a focus on hybrid energy storage devices that utilize triboelectric capabilities to produce energy through motion, moving away from rigid battery cells. This technology is especially attractive in the world of wearables.

Researcher have successfully created wearable fabrics that generates electricity through triboelectric materials. Triboelectricity is a charge of electricity generated by friction. The underlying phenomenon - the triboelectric effect - is electricity generation through electrostatic induction. When two different materials repeatedly touch each other, electrons shift causing opposite charges to build up on the two surfaces producing an electric charge. In other words, the textile generates electricity from mechanical action such as movement, deformation, vibration or pressure, while the user is moving.

As the person wearing such garments moves, the vibrations they create can be harvested and for example channeled into recharging a battery or powering plug-in electronic device or devices. The device may be used to store and provide energy over a continuous period and can be charged by plugging into an electrical power point or through vibration energy harvesting.

A general triboelectric nanogenerator is for example disclosed in CN 109 123 854 A.

US 9,876,443 B2 discloses a textile based energy generator with first and second electron substrates and an energy generating layer having triboelectric properties between the first and second electron substrates. The conductive layers (electrodes) are coated on one side of the textile substrates. Hence, the conductive layer is only one side of the fiber/fabric of the electrode substrates, whereas the other sides of the fiber/fabric remains uncoated and therefore not conductive.

Further, US 2019/356243 A1 also discloses an energy harvesting and energy storage apparatus integrated into a garment. The apparatus comprises a substrate with a spacer fabric, which comprises a first fabric layer and a second fabric layer with a support layer in between maintaining a distance between the first and second fabric layer. A triboelectric nanogenerator is disposed on the substrate, wherein the electrodes of the nanogenerator are formed by coating the substrate.

Hence, most of the known textile based energy generators are based on film-based substrates and/or coating or lamination of the electrodes with triboelectric materials and/or textile fabrics, which hinders the flexibility, breathability, porosity etc. and stability against washing.

### Short description of the invention

Hence, the object of the present invention is to improve known smart textile composites for energy-harvesting in order to enhance their properties such as breathability, flexibility, stretchability and washability.

A solution to the above mentioned problem is provided by a smart textile composite for energy harvesting comprising at least one conductive layer of electrically conductive textile fabrics and at least one intermediate layer of textile fabrics with triboelectric properties, wherein the at least one conductive layer and the at least one intermediate layer are attached to each other in a way so that there is a gap between the at least one conductive layer and the at least one intermediate layer.

This triboelectric smart textile composite allows via the triboelectric principle for an advanced power generation per unit mass. Moreover, the cost per watt of the inventive triboelectric harvester is lower than that of other known energy harvesters like e.g. piezoelectric energy harvesters. The cost of the smart textile composite is relatively constant, making it highly efficient regarding multi-frequency operation at low-frequency scales and extremely suitable for wearable smart-textile applications.

Preferably, the triboelectric intermediate layer is easily positively or negatively charged. Moreover, the intermediate layer is dielectric.

In another embodiment the smart textile composite comprises two conductive layers, namely a top conductive layer of electrically conductive textile fabrics and a bottom conductive layer of electrically conductive textile fabrics. The at least one intermediate layer of textile fabrics with triboelectric properties is then comprised between the top and the bottom conductive textile layers, wherein the top conductive layer, the bottom conductive layer and the intermediate triboelectric layer are spaced apart so that a gap is defined between the top layer and the intermediate triboelectric layer and/or between the bottom layer and the intermediate triboelectric layer.

Preferably, the conductive layer is generated by forming a fabric structure like e.g. a woven, nonwoven, knitted or embroidery structure using conductive yarn. This leads to a conductive layer, which is conductive on both sides. Moreover, the intermediate triboelectric layer may be generated by triboelectric fabric, which may be again a woven, nonwoven, knitted or embroidery textile produced by triboelectric yarns. The triboelectric and conductive layers may be joined by knitting. Preferably, they are joined by stitching or embroidery.

In this context, the triboelectric effect induces an electric current in the textile due to the influence of mechanical action. More precisely, when an external energy from the waste ambient environment, e.g. movement, deformation, vibration, pressure etc., is supplied to the inventive textile composite, all layers come into contact and are separated again and thus, generate AC voltages. In the embodiment with a single conductive layer and a single intermediate layer, electrical energy is generated when contact and separation occur between these two layers, whereas in the embodiment with two conductive layers, electrical energy is generated through contact and separation of the intermediate layer with the top conductive layer and through contact and separation of the intermediate layer with the bottom conductive layer.

The single-electrode triboelectric smart textile composite, that is the composite with a single conductive layer, has only one bottom electrode connected to the ground. When the triboelectric textile surface of the intermediate layer (top) comes in contact with the electrode of the conductive layer (bottom), the two surfaces get charged owing to the triboelectric effect. During the process of approaching and departing of these materials, the local electrical field distribution caused by charged surfaces will change. Then, there will be potential difference change between the bottom electrode and the ground, and electrons exchange between them to maintain the potential change. An advantage of this single-electrode based smart textile composite is its simple structure, which can be also easily integrated into other devices and which allows for a miniaturization.

For the double-electrode triboelectric smart textile composite, that is the composite with two conductive layers, the textile composite includes two textile electrodes and a triboelectric textile material in between. When mechanical movement is applied on the composite, the top electrode and triboelectric textile will contact each other, and thus, the triboelectric layer and electrode will get positively charged and negatively charged, respectively, due to the triboelectrification. Once they are separated by a short distance, the potential difference between the two electrodes will be induced, which will drive electrons to flow from the bottom electrode (bottom conductive layer) to the top electrode (top conductive layer), resulting in a pulse current with an external circuit connected. If they are brought into contact again, the electrons will flow back and the current will be reversed.

An advantage of this double-electrode textile composite is that the energy conversion efficiency is higher and that it is very stable.

The generated AC voltages may be converted into DC voltages by e.g. a rectifying circuit.

In another embodiment the at least one intermediate triboelectric layer is plasma treated using a low-pressure plasma. This plasma treatment allows promoting the electrical charge between the top and bottom electrically conductive layers.

The at least one conductive layer may comprise knitted, embroidered, woven or non-woven fabrics, wherein the fabric comprises a conductive thread, preferably out of the group comprising silver, stainless steel, carbon or carbon nanotube coated threads.

Moreover, the at least one intermediate layer may comprise knitted, embroidered, woven or non-woven fabrics with natural and/or synthetic fibres, which may be easily positively or negatively charged.

Thus, the triboelectric smart textile composite may be completely based on textile structures like embroidered, knitted, woven, nonwoven etc. textiles keeping all natural features of textile clothing such as breathability, flexibility, stretchability, washability etc.

Preferably, the natural and/or synthetic fibres of the at least one intermediate layer are chosen out of the group comprising wool, cotton, silk, Polyester (PES), Polyamide (PA), Polytetrafluoroethylene (PTFE), Polyacrylonitrile (PAN), Polyurethane (PU).

Thus, the smart textile composite according to the invention is environmentally friendly due to the use of these natural and synthetic fibres. In contrast to that, other energy harvesters like e.g. piezoelectric energy harvesters have always an issue of Eco-indicator 99. Moreover, the triboelectric smart textile composite is much easier to produce by using weaving, knitting, laminating or embroidery machines. Thus, these composites are most effective and suitable for any wearables and garments industries.

In a preferred embodiment, the at least one intermediate triboelectric layer is connected to the at least one conductive layer by stitching. This allows the forming of a gap between the two layers. Hence, the intermediate layer is separated from the conductive layer and the layers only come in contact, when an external energy is applied to the smart textile composite. This external energy, e.g. movement, deformation, vibration, pressure etc. is supplied and released randomly to the smart textile composite, such that the layers come in contact and are separated from each other repeatedly. This causes the generation of AC voltages that can be converted to DC voltages by a rectifying circuit. The smart textile composite or a device comprising the smart textile composite may comprise such a rectifying circuit.

In yet another embodiment the smart textile composite comprises a top and bottom conductive layer and a first and second intermediate triboelectric layer arranged between the top and the bottom electrically conductive textile layers, wherein the intermediate triboelectric layers are separated from each other. Preferably, the first intermediate layer is laminated to the top conductive layer and the second intermediate layer is laminated to the bottom conductive layer. However, the first and second intermediate layer may also be generated by stitching, knitting or embroidery on the top and bottom conductive layer, respectively. Moreover, the first and second intermediate layer may comprise different materials, which can be easily positively and negatively charged, respectively. For example, the first intermediate layer may comprise fibres out of the group comprising wool, silk, cotton, Polyamide (PA) and Polyacrylonitrile (PAN), whereas the second intermediate layer may comprise fibres out of the group comprising, Polyester (PES), Polytetrafluoroethylene (PTFE), Polyurethane (PU) or vice versa. Thus, in this embodiment the first intermediate layer is easily positively charged and the second intermediate layer is easily negatively charged or vice versa.

In this embodiment the first intermediate and top conductive layer form a first composite layer and the second intermediate and bottom conductive layer form a second composite layer. The first and second composite layers may be attached to each other by stitching or embroidery, such that the gap between the composite layers maintains. Hence, the first and second composite layer are separated from each other, such that energy generation through the triboelectric effect is possible. More precisely, the charges on the contact surfaces of the composite layers are separated, hence, an electrical potential is generated between the surfaces.

The inventive smart textile composite can form an energy harvesting device. Moreover, the smart textile composite can also form sensor.

The textile based triboelectric energy harvester according to the invention is very thin and flexible. Thus, the textile is comfortable to wear and can be easily integrated within human wearables or any movable, rotating or vibrating device to detect their vibration or movement and simultaneously generate energy from these motions.

The invention also relates to a method for manufacturing a smart textile composite comprising the steps:
- preparing at least one electrically conductive textile layer by producing a knitted, woven, nonwoven or embroidery structure with a conductive thread,
- preparing at least one intermediate layer of textile fabrics by producing a knitted, woven, nonwoven or embroidery structure with natural and/or synthetic fibres with triboelectric properties,
- connecting the at least one intermediate layer with the at least one electrically conductive layer by stitching or embroidery such that there is a gap between the at least one intermediate layer and the at least one conductive layer.

Preferably, after preparing the at least one intermediate layer its surface charge is improved with plasma, preferably with a low-pressure plasma.

In case the inventive smart textile composite comprises two conductive layers - a top and bottom conductive layer - the intermediate layer is comprised between these two conductive layers. The layers are again preferably connected by stitching or embroidery, such that a gap is formed between the intermediate layer and the top conductive layer and between the intermediate layer and the bottom conductive layer. Hence, all layers of the so produced smart textile composite are separated from each other.

In another embodiment, the smart textile composite comprises a top and bottom conductive layer and a first and second intermediate layer, wherein the method for manufacturing this smart textile composite is characterized in that after preparing the layers of the composite the first and second intermediate layer is laminated to the top and bottom conductive layer, respectively, wherein the first and second intermediate layer forms a first and second composite layer with the top and bottom layer, respectively, wherein after lamination the first and second composite layers are connected by stitching or embroidery.

The main steps of the method for manufacturing the inventive smart textile composite as well as an energy harvesting device or sensor comprising the smart textile composite are summarized below in more detail.

In a first step the conductive textiles, namely the at least one conductive layer, are prepared. That is, the knitted, woven, nonwoven or embroidery structure is produced containing a conductive thread. This conductive thread may be a metallic or non-metallic thread. More precisely, it may be a yarn coated with silver, stainless steel, copper, carbon or carbon nanotube.

In the next step, the at least one intermediate layer with triboelectric properties is prepared. For this purpose, preferably textiles, which can be easily positively or negatively charged are fabricated. These intermediate textiles have a woven, nonwoven, knitted or embroidery structure and contain natural and/or synthetic fibres. Most preferably, the fibres are chosen out of the group comprising cotton, wool, silk, Polyester (PES), Polyamide (PA), Polytetrafluoroethylene (PTFE), Polyacrylonitrile (PAN), Polyurethane (PU) fibres.

Preferably, in the next step the at least one intermediate layer is treated with plasma.

The next step comprises manufacturing of the smart composite textile by attaching the at least one conductive layer with the at least one intermediate layer by stitching or embroidery. More precisely, they are stitched together such that there is a gap between the layers. Depending on the number of layers used for the inventive smart textile composite, there is either one or two gaps and there can be a lamination step before stitching the layers together. In case the smart textile composite comprises two conductive layers - a top and bottom conductive layer - the intermediate layer may be attached to both layers by stitching or embroidery. However, the stitching is done in a way that there is a gap between the top conductive layer and the intermediate layer and between the intermediate layer and the bottom conductive layer. Furthermore, if the smart composite textile comprises two conductive layers and two intermediate layers - a first and second intermediate layer - then before stitching the layers together, the first and second intermediate layer may be laminated with the top and bottom conductive layer, respectively.

In the last step several energy conversion techniques may be developed. The smart textile composite has to be produced in a way such that the mechanical energy in form of movement etc. is converted into electrical energy. The smart textile composite can then be used as an energy-harvesting device. For the purpose of converting the generated AC voltages into DC voltages a rectifying circuit can be integrated in the device. In this last step of the production of the inventive device also means for storing the energy may be provided. Moreover, the device may be configured in such a way that it can be used as a self powered sensor device.

Another advantage of the inventive smart composite textile is that it is washable, breathable and that it allows for a protection against moisture. Preferably, the outer shell of the device is a washable Polyurethane layer. Thus, the device is functioning in any humid environment.

### Detailed description and preferred embodiments

The foregoing and other objects, features and advantages of the invention will become more apparent from the following detailed description, which proceeds with reference to the accompanying figures.
Fig. 1 shows an inventive smart textile composite with a conductive layer and a triboelectric layer with an oscilloscope measuring the generated voltages and the gap between the layers.
Fig. 2 shows an inventive smart textile composite with two conductive layers and one triboelectric layer with an oscilloscope measuring the generated voltages and the gaps between the layers.
Fig. 3 shows an inventive smart textile composite including two layers of triboelectric textile and two conductive layers and the gap between the composites.

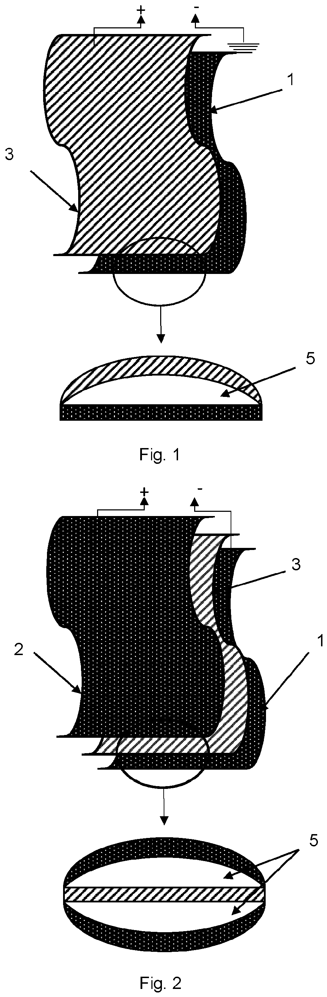

In Fig. 1 the inventive smart textile composite comprises a single textile conductive layer 1 of electrically conductive fabric material and a single textile intermediate layer 3 with triboelectric properties. There is a gap 5 between the two layers, such that energy generation via the triboelectric effect is possible. Preferably, the intermediate layer 3 is attached to the conductive layer 1 by stitching.

Fig. 2 depicts another embodiment of the smart textile composite, which comprises a top conductive layer 1 of electrically conductive fabric material, a bottom conductive layer 2 of electrically conductive fabric material and an intermediate triboelectric layer 3 with triboelectric properties. The intermediate triboelectric layer 3 is comprised between the top and bottom conductive layer 1, 2. Furthermore, as depicted at the bottom in Fig. 2 the top conductive layer 1, the bottom conductive layer 2 and the intermediate triboelectric layer 3 are spaced apart so that a gap 5 may be defined between the top conductive layer 1 and the intermediate triboelectric layer 3 and between the bottom conductive layer 2 and the intermediate triboelectric layer 3. In the embodiment in Fig. 2 there are two gaps 5, which are separated by the intermediate triboelectric layer 3. The intermediate triboelectric layer 3 may be stitched between the top and bottom conductive layer 1, 2 in a way that the gaps 5 are formed. The layers 1, 2, 3 are, thus, only connected at the edges of the smart textile composite as shown in Fig. 2. Hence, the gaps 5 can be formed and the layers 1, 2, 3 are separated.

For smart textile composites with a single intermediate triboelectric textile layer 3 as in Fig. 2, when an external pressure is applied onto the textile, the intermediate triboelectric layer 3 will induce a charge by changing its contact area with the two conductive layers 1, 2, resulting in an electrical potential difference between them. Thus, the negative charges on the surface of the triboelectric textile 3 can induce positive charges on the textile electrode 2, flowing free electrons from the textile electrode to ground.

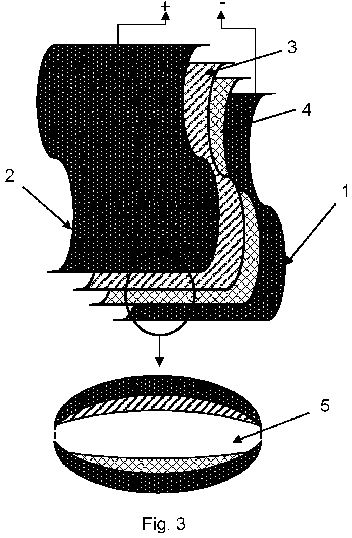

In another embodiment the smart textile composite comprises a first and second intermediate triboelectric layer 3, 4 as shown in Fig. 3. Each of the two intermediate triboelectric layers 3, 4 may be stitched or laminated to the top and bottom conductive layer 1, 2, respectively. However, the first and second intermediate triboelectric layers 3, 4 are separated and there is a gap between the two layers 3, 4, as shown at the bottom in Fig. 3. More precisely, the first intermediate layer 3 and the top conductive layer 1 may form a first composite layer and the second intermediate layer 4 and the bottom conductive layer 2 may form a second composite layer. The first and second composite layers may be attached to each other by stitching, such that a gap exists between these two layers. Thus, energy generation via the triboelectric effect is possible between the first and second composite layer.

The mechanism of electricity generation for the smart textile composite comprising a first and second intermediate triboelectric layer 3, 4 as depicted in Fig. 3 works as follows. As soon as a pressure is applied on the textile composite and released on its surface, the first triboelectric layer 3 gets in contact with the oppositely charged second triboelectric layer 4. To maintain an electric equilibrium of the system, during the releasing process, the triboelectric layer with positive charges will induce equivalent negative charges on the corresponding conductive layer and meanwhile, the other triboelectric layer with negative charges will induce positive charges on the other counter conductive layer. Thus, electrons will flow from one electrode to the other through an external circuit and a current is generated.

The advantage of a composite with a single triboelectric layer 3 is similar to single electrode triboelectric textile composites. They have a simple structure, are easy to integrate with other devices, and miniaturization is possible. However, the energy conversion efficiency is commonly less and relatively unstable in comparison with the smart textile composite comprising two intermediate triboelectric layers 3, 4. Depending on the respective field of application, either the single or double triboelectric layer composite may be used.

The at least one intermediate triboelectric layer 3 may be a woven, non-woven, knitted or embroidered fabric including natural and/or synthetic fibres.

Further, a low pressure plasma treatment may be performed on the at least one intermediate triboelectric layer 3, in order to promote the electrical charge between the top and bottom conductive layer 1, 2. This plasma treatment is performed before the at least one intermediate triboelectric layer 3 is connected to the top and bottom conductive layer 1, 2.

A big advantage of the so produced smart textile composite is that is washable and very durable. Thus, it can be easily integrated into clothing to generate energy from human movement. In other words it can be used as an energy harvesting device. This is especially effective if it is integrated into sports clothing. Moreover, the inventive smart textile composites may also be used in the context of smart-textiles and textiles used for healthcare, where the generated electrical power may be used immediately.

The inventive self-powering sensors can find their applications also in the transport sector including transport on water, on roads and in the air. In all these applications the important properties of the inventive smart textile composite - namely flexibility, breathability, wearability, washability and comfortability - are mandatory.

The textile based triboelectric composite material of the present invention acts as an electrical energy-generating device by means of mechanical action such as movement, deformation, vibration or pressure. When external energy such as stretch, friction movement or pressure is supplied to the composite device, it generates AC voltages, which are converted to DC by a rectifying circuit. This circuit may be integrated in the device. An oscilloscope may then read out the generated DC voltages.

Summarizing, the versatile triboelectric smart-textile sensor techniques (as shown in Fig. 1, 2 and 3) provide flexibility and suitability for wearable textile applications. Where any common cloths such as hand gloves, shirts or socks can be used as self-powered sensor and harvester against a weaved, knitted or embroidered textile electrode as a counterpart.

## Claims

1. Smart textile composite for energy harvesting comprising:
- at least one conductive layer (1) of electrically conductive textile fabrics,
- at least one intermediate layer (3) of textile fabrics with triboelectric properties, wherein the at least one conductive layer (1) and the at least one intermediate layer (3) are attached to each other in a way so that there is a gap between the layers (1, 3) of the smart textile composite,
**characterized in that** the at least one conductive layer (1) comprises knitted, embroidered, woven or non-woven fabric, wherein the fabric comprises a conductive thread.

2. Smart textile composite according to claim 1, comprising a top conductive layer (1) of electrically conductive textile fabrics and a bottom conductive layer (2) of electrically conductive textile fabrics, wherein the at least one intermediate layer (3) is comprised between the top (1) and the bottom (2) electrically conductive textile layers, wherein the top layer (1), the bottom layer (2) and the intermediate triboelectric layer (3) are attached to each other such that the gap is between the top layer (1) and the intermediate layer (3) and/or between the bottom layer (2) and the intermediate layer (3).

3. Smart textile composite according to any of the claims 1 to 2, wherein the conductive thread is out of the group comprising silver, stainless steel, carbon or carbon nanotube coated threads.

4. Smart textile composite according to any of the claims 1 to 4, wherein the at least one intermediate layer (3) is plasma treated using a low-pressure plasma.

5. Smart textile composite according to any of the claims 1 to 4, wherein the at least one intermediate layer (3) comprises knitted, embroidered, woven or non-woven fabrics with natural and/or synthetic fibres.

6. Smart textile composite according to claim 5, wherein the natural and/or synthetic fibres of the at least one intermediate layer (3) are chosen out of the group comprising wool, cotton, silk, Polyester (PES), Polyamide (PA), Polytetrafluoroethylene (PTFE), Polyacrylonitrile (PAN), Polyurethane (PU).

7. Smart textile composite according to claim 2 and any of the claims 3 to 6, wherein the at least one intermediate layer (3) is connected to the top (1) and bottom conductive layer (2) by stitching or embroidery.

8. Smart textile composite according to claim 2 and any of the claims 3 to 7, **characterized by** a first intermediate layer (3) and a second intermediate layer (4), wherein the first intermediate layer (3) and the second intermediate layer (4) comprise different fibres, wherein the first and second intermediate layer (3, 4) are arranged between the top (1) and the bottom (2) conductive textile layers, wherein the intermediate triboelectric layers (3, 4) are separated from each other.

9. Smart textile composite according to claim 8, wherein the first intermediate layer (3) is connected to the top (1) and the second intermediate layer (4) is connected to the bottom conductive layer (2) by a lamination process, wherein the first and second intermediate layer (3, 4) and the top and bottom conductive layer (1, 2) form a first and second composite layer, wherein the first and second composite layer are connected by stitching, embroidery or knitting such that the gap between the first and second composite layer is maintained.

10. Energy harvesting device comprising a smart textile composite according to any of the claims 1 to 9.

11. Sensor comprising a smart textile composite according to any of the claims 1 to 9.

12. Method for manufacturing a smart textile composite comprising the steps
• preparing at least one electrically conductive textile layer (1) by producing a knitted, woven, nonwoven or embroidery structure with a conductive thread,
• preparing at least one intermediate layer of textile fabrics with triboelectric properties (3) by producing a knitted, woven, nonwoven or embroidery structure with natural and/or synthetic fibres,
• connecting the at least one intermediate layer (3) with the at least one conductive layer (1) by stitching or embroidery such that there is a gap between the layers (1, 3) of the smart textile composite.

13. Method according to claim 12, wherein after preparing the at least one intermediate layer (3) its surface charge is improved with plasma, preferably with a low pressure plasma.

14. Method according to any of the claims 12 to 13, wherein the smart textile composite comprises a top and bottom conductive layer (1, 2) and a first and second intermediate layer (3, 4), **characterized in that** after preparing the layers (1, 2, 3, 4) the first and second intermediate layer (3, 4) is laminated to the top and bottom conductive layer (1, 2), respectively, wherein the first and second intermediate layer (3, 4) forms a first and second composite layer with the top and bottom layer (1, 2), respectively, wherein after lamination the first and second composite layers are connected by stitching or embroidery.

## Patentansprüche

1. Intelligenter textiler Verbundstoff zur Energiegewinnung, umfassend:
- mindestens eine leitfähige Schicht (1) aus elektrisch leitfähigen textilen Stoffen,
- mindestens eine Zwischenschicht (3) aus textilen Stoffen mit triboelektrischen Eigenschaften,
wobei die mindestens eine leitfähige Schicht (1) und die mindestens eine Zwischenschicht (3) so miteinander verbunden sind, dass zwischen den Schichten (1, 3) des intelligenten textilen Verbundstoffs ein Spalt besteht,
**dadurch gekennzeichnet, dass** die mindestens eine leitende Schicht (1) einen gewirkten, gestickten, gewebten oder nicht-gewebten Stoff umfasst, wobei der Stoff einen leitfähigen Faden umfasst.

2. Intelligenter textiler Verbundstoff nach Anspruch 1, umfassend eine obere leitfähige Schicht (1) aus elektrisch leitfähigen textilen Stoffen und eine untere leitfähige Schicht (2) aus elektrisch leitfähigen textilen Stoffen, wobei die mindestens eine Zwischenschicht (3) zwischen der oberen (1) und der unteren (2) elektrisch leitfähigen textilen Schicht enthalten ist, wobei die obere Schicht (1), die untere Schicht (2) und die triboelektrische Zwischenschicht (3) so miteinander verbunden sind, dass der Spalt zwischen der oberen Schicht (1) und der Zwischenschicht (3) und/oder zwischen der unteren Schicht (2) und der Zwischenschicht (3) liegt.

3. Intelligenter textiler Verbundstoff nach einem der Ansprüche 1 bis 2, wobei der leitfähige Faden aus der Gruppe stammt, die mit Silber, rostfreiem Stahl, Kohlenstoff oder Kohlenstoffnanoröhren beschichtete Fäden umfasst.

4. Intelligenter textiler Verbundstoff nach einem der Ansprüche 1 bis 4, wobei die mindestens eine Zwischenschicht (3) mit einem Niederdruckplasma plasmabehandelt ist.

5. Intelligenter textiler Verbundstoff nach einem der Ansprüche 1 bis 4, wobei die mindestens eine Zwischenschicht (3) gewirkte, gestickte, gewebte oder nicht-gewebte Stoffe mit natürlichen und/oder synthetischen Fasern umfasst.

6. Intelligenter textiler Verbundstoff nach Anspruch 5, wobei die natürlichen und/oder synthetischen Fasern der mindestens einen Zwischenschicht (3) aus der Gruppe ausgewählt sind, die Wolle, Baumwolle, Seide, Polyester (PES), Polyamid (PA), Polytetrafluorethylen (PTFE), Polyacrylnitril (PAN), Polyurethan (PU) umfasst.

7. Intelligenter textiler Verbundstoff nach Anspruch 2 und einem der Ansprüche 3 bis 6, wobei die mindestens eine Zwischenschicht (3) mit der oberen (1) und unteren leitfähigen Schicht (2) durch Nähen oder Sticken verbunden ist.

8. Intelligenter textiler Verbundstoff nach Anspruch 2 und einem der Ansprüche 3 bis 7, **gekennzeichnet durch** eine erste Zwischenschicht (3) und eine zweite Zwischenschicht (4), wobei die erste Zwischenschicht (3) und die zweite Zwischenschicht (4) unterschiedliche Fasern umfassen, wobei die erste und die zweite Zwischenschicht (3, 4) zwischen der oberen (1) und der unteren (2) leitfähigen textilen Schicht angeordnet sind, wobei die triboelektrischen Zwischenschichten (3, 4) voneinander getrennt sind.

9. Intelligenter textiler Verbundstoff nach Anspruch 8, wobei die erste Zwischenschicht (3) mit der oberen (1) und die zweite Zwischenschicht (4) mit der unteren leitfähigen Schicht (2) durch ein Laminierungsverfahren verbunden ist, wobei die erste und die zweite Zwischenschicht (3, 4) und die obere und die untere leitfähige Schicht (1, 2) eine erste und eine zweite Verbundschicht bilden, wobei die erste und die zweite Verbundschicht durch Nähen, Sticken oder Stricken so verbunden sind, dass der Spalt zwischen der ersten und der zweiten Verbundschicht erhalten bleibt.

10. Energiegewinnende Vorrichtung, die einen intelligenten textilen Verbundstoff nach einem der Ansprüche 1 bis 9 umfasst.

11. Sensor mit einem intelligenten textilen Verbundstoff nach einem der Ansprüche 1 bis 9.

12. Verfahren zur Herstellung eines intelligenten textilen Verbundstoffs, das die folgenden Schritte umfasst
• Herstellung mindestens einer elektrisch leitfähigen textilen Schicht (1) durch Herstellung einer Strick-, Web-, Vlies- oder Stickstruktur mit einem leitfähigen Faden,
• Herstellung mindestens einer Zwischenschicht aus textilen Stoffen mit triboelektrischen Eigenschaften (3) durch Herstellung einer Strick-, Web-, Vlies- oder Stickstruktur mit natürlichen und/oder synthetischen Fasern,
• Verbinden der mindestens einen Zwischenschicht (3) mit der mindestens einen leitfähigen Schicht (1) durch Nähen oder Sticken, so dass ein Spalt zwischen den Schichten (1, 3) des intelligenten textilen Verbundstoffs entsteht.

13. Verfahren nach Anspruch 12, wobei nach der Herstellung der mindestens einen Zwischenschicht (3) deren Oberflächenladung mit Plasma, vorzugsweise mit einem Niederdruckplasma, verbessert wird.

14. Verfahren nach einem der Ansprüche 12 bis 13, wobei der intelligente textile Verbundstoff eine obere und untere leitfähige Schicht (1, 2) und eine erste und zweite Zwischenschicht (3, 4) umfasst, **dadurch gekennzeichnet, dass** nach der Herstellung der Schichten (1, 2, 3, 4) die erste und zweite Zwischenschicht (3, 4) auf die obere bzw. untere leitfähige Schicht (1, 2) laminiert wird, wobei die erste und zweite Zwischenschicht (3, 4) eine erste bzw. zweite Verbundschicht mit der oberen bzw. unteren Schicht (1, 2) bildet, wobei nach dem Laminieren die erste und zweite Verbundschicht durch Nähen oder Sticken verbunden werden.

## Revendications

1. Composite textile intelligent pour une récupération d'énergie, comprenant :
- au moins une couche conductrice (1) de tissus textiles électriquement conducteurs,
- au moins une couche intermédiaire (3) de tissus textiles présentant des propriétés triboélectriques, dans lequel la au moins une couche conductrice (1) et la au moins une couche intermédiaire (3) sont fixées l'une à l'autre de manière à ce qu'il y ait un espace entre les couches (1, 3) du composite textile intelligent,
**caractérisé en ce que** la au moins une couche conductrice (1) comprend un tissu tricoté, brodé, tissé ou non tissé, le tissu comprenant un fil conducteur.

2. Composite textile intelligent selon la revendication 1, comprenant une couche conductrice supérieure (1) de tissus textiles électriquement conducteurs et une couche conductrice inférieure (2) de tissus textiles électriquement conducteurs, dans lequel la au moins une couche intermédiaire (3) est comprise entre les couches textiles électriquement conductrices supérieure (1) et inférieure (2), dans lequel la couche supérieure (1), la couche inférieure (2) et la couche triboélectrique intermédiaire (3) sont fixées les unes aux autres de sorte que l'espace est entre la couche supérieure (1) et la couche intermédiaire (3) et/ou entre la couche inférieure (2) et la couche intermédiaire (3).

3. Composite textile intelligent selon l'une quelconque des revendications 1 à 2, dans lequel le fil conducteur est hors du groupe comprenant des fils revêtus d'argent, d'acier inoxydable, de carbone ou de nanotubes de carbone.

4. Composite textile intelligent selon l'une quelconque des revendications 1 à 4, dans lequel la au moins une couche intermédiaire (3) est traitée au plasma en utilisant un plasma à basse pression.

5. Composite textile intelligent selon l'une quelconque des revendications 1 à 4, dans lequel la au moins une couche intermédiaire (3) comprend des tissus tricotés, brodés, tissés ou non tissés avec des fibres naturelles et/ou synthétiques.

6. Composite textile intelligent selon la revendication 5, dans lequel les fibres naturelles et/ou synthétiques de la au moins une couche intermédiaire (3) sont choisies dans le groupe comprenant la laine, le coton, la soie, le polyester (PES), le polyamide (PA), le polytétrafluoroéthylène (PTFE), le polyacrylonitrile (PAN), le polyuréthane (PU).

7. Composite textile intelligent selon la revendication 2 et l'une quelconque des revendications 3 à 6, dans lequel la au moins une couche intermédiaire (3) est reliée à la couche conductrice supérieure (1) et inférieure (2) par couture ou broderie.

8. Composite textile intelligent selon la revendication 2 et l'une quelconque des revendications 3 à 7, **caractérisé par** une première couche intermédiaire (3) et une seconde couche intermédiaire (4), dans lequel la première couche intermédiaire (3) et la seconde couche intermédiaire (4) comprennent des fibres différentes, dans lequel les première et seconde couches intermédiaires (3, 4) sont agencées entre les couches textiles conductrices supérieure (1) et inférieure (2), dans lequel les couches triboélectriques intermédiaires (3, 4) sont séparées l'une de l'autre.

9. Composite textile intelligent selon la revendication 8, dans lequel la première couche intermédiaire (3) est reliée à la partie supérieure (1) et la seconde couche intermédiaire (4) est reliée à la couche conductrice inférieure (2) par un processus de stratification, dans lequel la première et la seconde couche intermédiaire (3, 4) et les couches conductrices supérieure et inférieure (1, 2) forment une première et une seconde couche de composite, dans lequel la première et la seconde couche de composite sont reliées par couture, broderie ou tricotage de telle sorte que l'espace entre la première et la seconde couche composite est maintenu.

10. Dispositif de récupération d'énergie comprenant un composite textile intelligent selon l'une quelconque des revendications 1 à 9.

11. Capteur comprenant un composite textile intelligent selon l'une quelconque des revendications 1 à 9.

12. Procédé de fabrication d'un composite textile intelligent, comprenant les étapes consistant à
• préparer au moins une couche textile électriquement conductrice (1) en produisant une structure tricotée, tissée, non-tissée ou brodée avec un fil conducteur,
• préparer au moins une couche intermédiaire de tissus textiles présentant des propriétés triboélectriques (3) en produisant une structure tricotée, tissée, non tissée ou brodée avec des fibres naturelles et/ou synthétiques,
• relier la au moins une couche intermédiaire (3) à la au moins une couche conductrice (1) par couture ou broderie de sorte qu'il y ait un espace entre les couches (1, 3) du composite textile intelligent.

13. Procédé selon la revendication 12, dans lequel après la préparation de la au moins une couche intermédiaire (3), sa charge de surface est améliorée avec du plasma, de préférence avec un plasma à basse pression.

14. Procédé selon l'une quelconque des revendications 12 à 13, dans lequel le composite textile intelligent comprend une couche conductrice supérieure et inférieure (1, 2) et une première et une seconde couche intermédiaire (3, 4), **caractérisé en ce qu'**après préparation des couches (1, 2, 3, 4), la première et la seconde couche intermédiaire (3, 4) sont stratifiées sur la couche conductrice supérieure et inférieure (1, 2), respectivement, dans lequel la première et la seconde couche intermédiaire (3, 4) forment une première et une seconde couche de composite avec la couche supérieure et inférieure (1, 2), respectivement, dans lequel après stratification, les première et seconde couches de composite sont reliées par couture ou broderie.
